# EUROPEAN PATENT APPLICATION

(11) **EP 4 815 441 A1**
(43) Date of publication of application: **30.09.2026**
(21) Application number: 25165707.8
(22) Date of filing: 24.03.2025
(51) Int. Cl.: H04N 19/107, H04N 19/146, H04N 19/172, H04N 19/177

(54) **METHOD AND DEVICE FOR ADAPTING ENCODING OF IMAGE FRAMES OF A VIDEO**

(71) Applicant: Axis AB, 223 69 Lund (SE)
(72) Inventor: Edpalm, Viktor, 223 69 Lund (SE); Palmaeus, Johan, 223 69 Lund (SE); Antonsson, Jakob, 223 69 Lund (SE)
(74) Representative: AWA Sweden AB

(57) **Abstract**

A device, a non-transitory computer, and a method for adapting encoding of image frames of a video are provided. The image frames are arranged in a sequence of groups of pictures, GOPs, and each GOP contains an intra frame and a plurality of successive inter frames. A start is determined of a second GOP subsequent to a first GOP in the sequence of GOPs, and encoding is adapted of each of, or a subset of, a predetermined number of inter frames of the first GOP which immediately precede the determined start of the second GOP. The encoding is adapted such that the total size of the predetermined number of inter frames of the first GOP with adapting encoding is smaller than the size of the predetermined number of inter frames of the first GOP would have been without adapting encoding.

## Description

### Technical field

The present invention relates to the field of encoding of image frames and specifically to adapting encoding of image frames of a video arranged in groups of pictures (GOPs).

### Background

There are several situations where the bitrate of an encoded video is relevant, such as when the encoded video should be transmitted over a network, or when the encoded video should be stored. Problems may arise in relation to the bitrate of the encoded video, e.g. due to a maximum allowed peak bitrate in the network, a maximum buffer size or allocated buffer size. For example, a too high bitrate of an encoded video may result in loss of frames of the encoded video. Losing part of a frame during e.g. a network transmission will lead to corrupt video until the next intra frame is transmitted. The problems become more frequent with increased frame size of the encoded video resulting, e.g., from increased resolution, lower compression level, or higher pixel quality of the image frames of the video. Furthermore, the problems typically become particularly acute at peaks of the bitrate of the encoded video. Hence, new ways of adapting the bitrate of encoded video are desired.

### Summary

It is an objective of the present invention to mitigate the above problems and provide new methods, a non-transitory computer readable memory, and a device for adapting encoding of image frames of a video arranged in a sequence of GOPs.

According to a first aspect, a method is provided for adapting encoding of image frames of a video. The image frames are arranged in a sequence of GOPs, and each GOP contains an intra frame and a plurality of successive inter frames. The method comprises determining a start of a second GOP subsequent to a first GOP in the sequence of GOPs, and adapting encoding of each of, or a subset of, a predetermined number of inter frames of the first GOP which immediately precede the determined start of the second GOP. The adapting is such that the total size of the predetermined number of inter frames of the first GOP with adapting encoding is smaller than the size of the predetermined number of inter frames of the first GOP would have been without adapting encoding.

By the 'start' of the second GOP is meant the location of the first frame of the second GOP.

By the second GOP being 'subsequent' to the first GOP is meant that the second GOP comes immediately after the first GOP in the sequence of GOPs.

The terms "first" GOP and 'second' GOP are used to indicate that the first GOP is different from and precedes the second GOP in the sequence of GOPs. The terms should not be interpreted such that the first GOP and second GOP need to be the first and second GOPs of the sequence of GOPs. They may be located anywhere in the sequence of GOPs.

By 'immediately precede' the determined start of the second GOP is meant that the predetermined number of inter frames are the last inter frames of the first GOP.

By 'size' of a frame or frames is meant the number of bits of the frame or frames.

By adapting the encoding to reduce the size of the predetermined number of inter frames of the first GOP, the bitrate of the encoded video is reduced before the intra frame of the second GOP. This is advantageous since this will leave more resources available for a peak in bit rate due to the intra frame at the start of the second GOP.

According to a second aspect, a non-transitory computer-readable storage medium is provided having stored thereon instructions for implementing the method according to the method of the first aspect, when executed in a device having processing capabilities.

According to a third aspect, a device is provided for adapting encoding of image frames of a video, wherein the image frames are arranged in a sequence of GOPs, and wherein each GOP contains an intra frame and a plurality of successive inter frames, the device comprising circuitry configured to execute functions for implementing the method of the first aspect.

It is to be understood that this invention is not limited to the particular component parts of the device described or acts of the method described as such devices and methods may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:
Figure 1 is a flow chart of a method for adapting encoding of image frames of a video arranged in GOPs.
Figure 2a shows an illustration of an example of a video segment including a number of GOPs.
Figure 2b shows an illustration of an example of adapted frame sizes for the GOPs of Figure 2a.
Figure 3 schematically illustrates a device for adapting encoding of image frames of a video arranged in GOPs.

### Detailed description

The present invention will now be described more fully hereinafter with reference to the accompanying drawings, in which embodiments of the invention are shown.

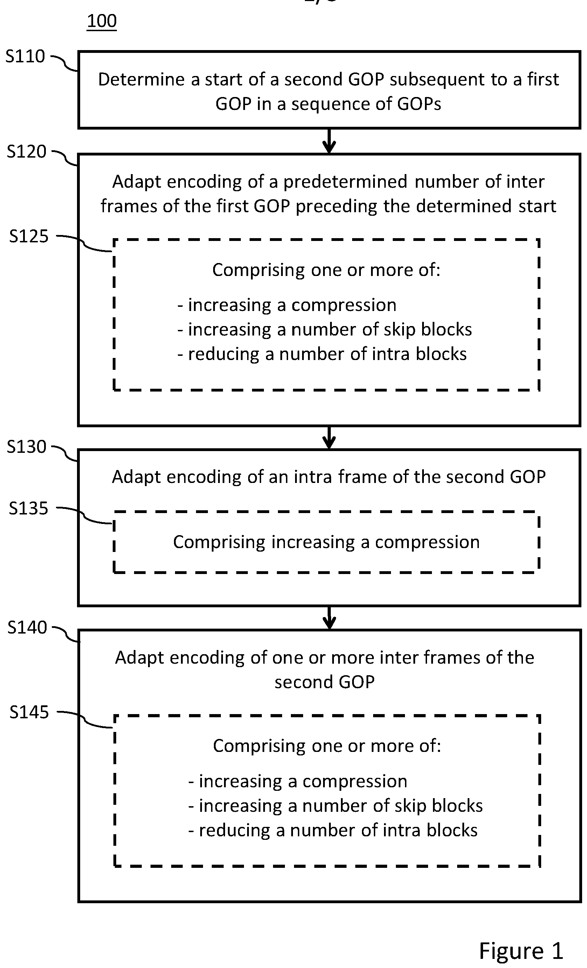

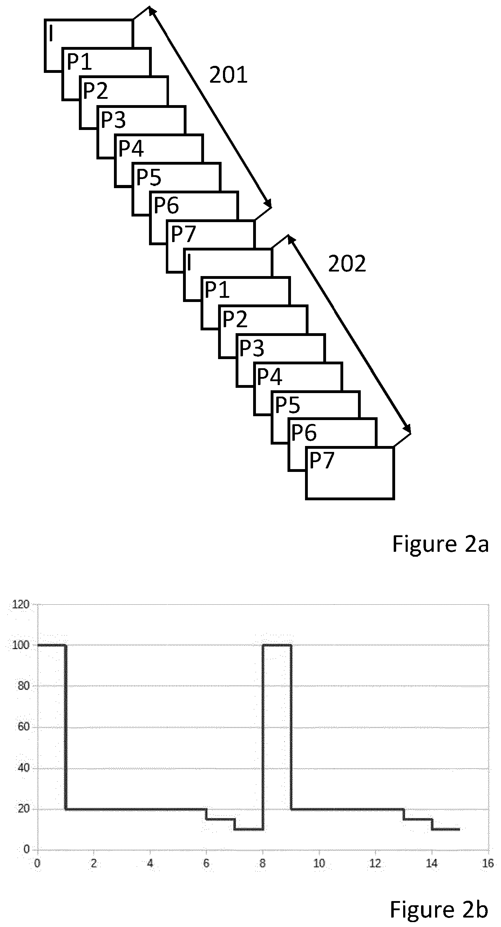

Embodiments of a method 100 for adapting encoding of image frames of a video, wherein the image frames are arranged in a sequence of GOPs and each GOP starts with an intra frame followed by a plurality of successive inter frames, will now be described in relation to the flow chart in Figure 1 and the illustrations in Figures 2a and 2b. Different terms may be used other than intra frame and inter frame, such as intracoded frame and intercoded frame, respectively.

Turning to Figure 2a, an illustration is shown of two consecutive GOPs including a first GOP 201 and a second GOP 202 subsequent to the first GOP 201. Each of the first GOP 201 and the second GOP 202 comprises a number of frames, wherein a first frame is an intra frame I followed by seven inter frames P1-P7. The frames may for example be captured by a video camera, such as a monitoring camera, a body worn camera or other, and encoded by an encoder.

It is to be noted that the illustration shown in Figure 2a is a simplified illustration. For example, the number of inter frames of each GOP may be more than illustrated, and may differ between GOPs. Furthermore, the GOPs are shown in isolation but the GOPs would typically be included in a sequence of GOPs. Furthermore, even if the inter frames disclosed are indicated as P frames, the invention may be applied also to other types of inter coded frames, such as B frames.

Turning to Figure 1, the method 100 comprises determining S110 a start of a second GOP subsequent to a first GOP in the sequence of GOPs. The method 100 further comprises adapting S120 encoding of each of, or a subset of, a predetermined number of inter frames of the first GOP which immediately precede the determined start of the second GOP. The adapting is such that the total size of the predetermined number of inter frames with adapting encoding is smaller than without adapting encoding.

Reducing the size of the predetermined number of inter frames of the first GOP just before the intra frame at the start of the second GOP is advantageous since this will leave more resources available for a peak in bit rate due to the intra frame at the start of the second GOP.

For example, when a maximum peak bitrate applies to a time window that is longer than a single frame, e.g. for a time window corresponding to the time of the predetermined number of inter frames of the first GOP and the intra frame of the second GOP or longer, more of this maximum peak bitrate may be used for the intra frame of the second GOP after the reducing of size of the predetermine number of inter frames of the first GOP. Furthermore, in scenarios where buffer capacity is a limiting factor, reducing the size of the predetermined number of inter frames of the first GOP will enable reduction of buffer fullness before the intra frame of the second GOP.

Furthermore, as the predetermined number of inter frames of the first GOP immediately precede the start of the second GOP, they are at the end of the first GOP. Hence, reducing the quality to the predetermined number of inter frames of the first GOP by reducing their size will not affect any inter frames outside the predetermined number of inter frames since no subsequent inter frames will use them as reference. From this point of view the last inter frames, and in particular the last inter frame, of the first GOP is of least value for the GOP as a whole.

The determining S110 of the start of the second GOP may be performed at different times depending on whether the number of frames of each GOP of the sequence of GOPs is fixed or if the number of frames of each GOP may be set dynamically. When the number of frames of each GOP is fixed, the determining S110 may be performed at any time before adapting S120 encoding of the number of inter frames of the first GOP. This is because the start of each GOP will be known in advance when the number of frames of each GOP is fixed. The fixed number may be the same for each GOP or it may differ between GOPs. When the number of frames of each GOP is set dynamically, the number of frames of each GOP may determined based on the amount of motion in the frames of the GOP such that the higher the amount of motion, the shorter the GOP. When the number of frames of each GOP is set dynamically, the determining S110 may be performed as soon as the start of the second GOP is possible to determine. For example, the start of a GOP may be determined S110 one or two GOPs in advance. However, in order for the method 100 to be applicable, the start of the second GOP needs to be possible to determine in time for encoding the predetermined number of inter frames of the first GOP since adapting S120 encoding of the predetermined number of inter frames of the first GOP requires knowledge of which inter frames will immediately precede the start of the second GOP.

As indicated hereinabove, either the encoding is adapted for each of the predetermined number of inter frames or only for a subset of them. As an example, the predetermined number may be three, meaning the three inter frames that immediately precede the determined start of the second GOP. Then adapting S120 encoding may either be of all three of them or of only a subset, such as of the first and third of the three. Adapting S120 encoding for only the second and third of them is equivalent to adapting S120 encoding for each of the two inter frames of the first GOP immediately preceding the determined start of the second GOP.

In one embodiment, the predetermined number is two, meaning the two inter frames that immediately precede the determined start of the second GOP, i.e. the last two inter frames of the first GOP. Then adapting S120 encoding may either be of all two of them or of only a subset, such as only the first or only the second of the two. Adapting S120 encoding for only the second of them is equivalent to adapting S120 encoding for the last inter frame of the first GOP immediately preceding the determined start of the second GOP.

In another embodiment, the predetermined number is one meaning the last inter frame of the first GOP. In this embodiment, the alternative of adapting encoding for a subset is not relevant. Hence, the method 100 then includes adapting S120 encoding of the inter frame of the first GOP which immediately precedes the determined start of the second GOP. The adapting is such that the size of the inter frame with adapting encoding is smaller than without adapting encoding.

An example of how frame size may be adapted is illustrated in Figure 2b where the relative size is plotted for each frame of the two GOPs illustarated in Figure 2a. As can be seen, the size of the initial intra frame is substantially larger than the following seven inter frames. In the example, encoding the last two interframes of each GOP has been adapted according to an embodiment of the invention such that the total size of the them with adapting encoding is smaller than without adapting encoding. Specifically, in the example, encoding of the penultimate inter frame in each GOP is adapted such that it is smaller than the size of the first five interframes and encoding of the last inter frame has been adapted such that it is smaller than the size of the penultimate interframe. It is to be noted that the size of the encoded frames plotted is only to illustrate the effect of an embodiment of the invention. In reality the size of all inter frames may differ, as well as the size of the intra frames.

Adapting S120 encoding may comprise one or more of increasing S125 a compression of, increasing S125 a number of skip blocks in, and reducing S125 a number of intra blocks in each of, or the subset of, the predetermined number of inter frames of the first GOP. Increasing S125 a compression may be performed by increasing a OP value when encoding according to the H.264 standard, or increasing a corresponding compression value when encoding according to another standard.

A skip block is a block for which no image information is sent to the decoder; only an indication that the block is a skip block. Instead of re-encoding a skip block for each subsequent frame, the encoder simply references the block from a previous frame, indicating that it should be skipped or copied over as-is. A block here is used to denote a group of pixels processed together during encoding. Blocks may also be denoted macroblocks, or coding tree units depending on the encoding format used. The term for skip blocks may also differ between encoding formats.

In embodiments including increasing S125 the compression of each of, or the subset of, the predetermined number of inter frames of the first GOP, the increase of the compression may be inversely proportional to a compression with which the inter frames would have been encoded without the increase of the compression. Hence, if compression would have been high according to unadapted encoding, less increasing S125 of the compression would be made than if compression would have been low according to unadapted encoding. If unadapted encoding would produce high-quality video and high bitrate, there is more room for increasing compression than if unadapted encoding would produce lower-quality video and relatively low bitrate.

In addition to adapting S120 encoding of each of, or a subset of, the predetermined number of inter frames of the first GOP, the encoding of the intra frame of the second GOP may be reduced in size during encoding, e.g. by compression, in relation to general peak bitrate control. However, even with such reduced size, a difference in quality between the intra frame of the second GOP and the predetermined number of inter frames of the first GOP after adapting S110 encoding to reduce total size may be so large that there is a visual effect of the quality increase that is unwanted. Hence, adapting S130 encoding of the intra frame of the second GOP may be performed to reduce the visual effect of the quality increase. The adapted S130 encoding is such that the total size of the intra frame of the second GOP is smaller than the size of the intra frame of the second GOP would have been without adapting S130 encoding. The adapting S130 encoding of the intra frame of the second GOP may comprise increasing S135 a compression of the intra frame of the second GOP.

In order to reduce the quality increase and hence further reduce the visual effect, adapting S140 encoding of one or more inter frames of the second GOP which immediately succeed the intra frame of the second GOP may be additionally or alternatively included. The adapted S140 encoding is such that the total size of the one or more inter frames of the second GOP is smaller than the size of the one or more inter frames of the second GOP would have been without adapting encoding. Adapting S140 encoding may comprise one or more of increasing S145 a compression of, increasing S145 a number of skip blocks in, and reducing S145 a number of intra blocks in the one or more inter frames of the second GOP.

The method 100 is described hereinabove in relation to two GOPs, namely a first GOP and a second GOP. However, the method 100 will in practice typically be repeated for each two consecutive GOPs in the sequence of GOPs. Hence, when the method 100 is finished in relation to the first GOP and the second GOP, it is typically performed for the second GOP and a third GOP subsequent to the second GOP in the sequence of GOPs. The start of the third GOP is then determined and encoding is adapted of a predetermined number of inter frames of the second GOP which immediately precede the determined start of the third GOP. The method 100 is then performed in relation to the third GOP and a fourth GOP subsequent to the third GOP and so forth.

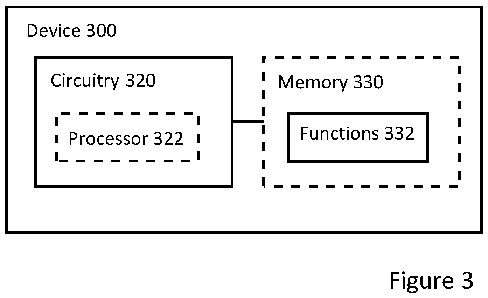

Figure 3 shows a block diagram in relation to embodiments of a device 300 for encoding image frames of a video, wherein the image frames are arranged in GOPs, and wherein each GOP contains an intra frame and a plurality of successive interframes.

The device 300 comprises a circuitry 320. The circuitry 320 is configured to carry out functions 332 of the device 300. The circuitry 320 may include a processor 322, such as for example a central processing unit (CPU), graphical processing unit (GPU), tensor processing unit (TPU), microcontroller, or microprocessor. The processor 322 is configured to execute program code. The program code may for example be configured to carry out the functions of the device 300.

The device 300 may further comprise a memory 330. The memory 330 may be one or more of a buffer, a flash memory, a hard drive, a removable media, a volatile memory, a non-volatile memory, a random access memory (RAM), or another suitable device. In a typical arrangement, the memory 330 may include a non-volatile memory for long term data storage and a volatile memory that functions as device memory for the circuitry 320. The memory 330 may exchange data with the circuitry 320 over a data bus. Accompanying control lines and an address bus between the memory 330 and the circuitry 320 also may be present.

Functions of the device 300 may be embodied in the form of executable logic routines (e.g., lines of code, software programs, etc.) that are stored on a non-transitory computer readable medium (e.g., the memory 330) of the device 300 and are executed by the circuitry 320 (e.g., using the processor 322). Furthermore, the functions of the device 300 may be a stand-alone software application or form a part of a software application that carries out additional tasks related to the device 300. The described functions may be considered a method that a processing unit, e.g., the processor 322 of the circuitry 320 is configured to carry out. Also, while the described functions may be implemented in software, such functionality may as well be carried out via dedicated hardware or firmware, or some combination of hardware, firmware and/or software.

The circuitry 320 is configured to execute the functions 332 for performing the method 100 as described in relation to Figure 1. The detailed description of the acts of the method 100 described in relation to Figure 1 hereinabove apply also for the functions 332 of the device 300. Furthermore, the optional additional features of the method 100 described in relation to Figure 1 hereinabove, when applicable, apply also to the device 300.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method (100) for adapting encoding of image frames of a video, wherein the image frames are arranged in a sequence of groups of pictures, GOPs, and wherein each GOP contains an intra frame and a plurality of successive inter frames, the method comprising:
determining (S110) a start of a second GOP subsequent to a first GOP in the sequence of GOPs; and
adapting (S125) encoding of each of, or a subset of, a predetermined number of inter frames of the first GOP which immediately precede the determined start of the second GOP, such that the total size of the predetermined number of inter frames of the first GOP with adapting encoding is smaller than the size of the predetermined number of inter frames of the first GOP would have been without adapting encoding.

2. The method (100) of claim 1, wherein adapting encoding of each of, or the subset of, the predetermined number of inter frames of the first GOP comprises one or more of:
increasing (S125) a compression of each of, or the subset of, the predetermined number of inter frames of the first GOP,
increasing (S125) a number of skip blocks in each of, or the subset of, the predetermined number of inter frames of the first GOP, and
reducing (S125) a number of intra blocks in each of, or the subset of, the predetermined number of inter frames of the first GOP.

3. The method (100) according to claims 1 or 2, further comprising:
adapting (130) encoding of an intra frame of the second GOP, such that the total size of the intra frame of the second GOP is smaller than the size of the intra frame of the second GOP would have been without adapting encoding.

4. The method (100) according to claim 3, wherein adapting encoding of the intra frame of the second GOP comprises Increasing (S135) a compression of the intra frame of the second GOP.

5. The method (100) according to claim 3 or 4, further comprising:
adapting (S140) encoding of one or more inter frames of the second GOP which immediately succeed the intra frame of the second GOP, such that the total size of the one or more inter frames of the second GOP is smaller than the size of the one or more inter frames of the second GOP would have been without adapting encoding.

6. The method (100) according to claim 5, wherein adapting encoding the one or more inter frames of the second GOP comprises one or more of:
increasing (S145) a compression of the one or more inter frames of the second GOP,
increasing (S145) a number of skip blocks in the one or more inter frames of the second GOP, and
reducing (S145) a number of intra blocks in the one or more inter frames of the second GOP.

7. The method (100) according to any one of the previous claims, wherein the predetermined number is two.

8. The method (100) according to any one of the preceding claims, wherein encoding is adapted for each of the predetermined number of inter frames of the first GOP.

9. The method (100) according to any one of claims 1 and 3-8, wherein adapting encoding of each of, or a subset of, a predetermined number of inter frames of the first GOP comprises increasing a compression of each of, or the subset of, the predetermined number of inter frames of the first GOP, wherein the increase of the compression is inversely proportional to a compression with which the inter frames would have been encoded without the increase of the compression.

10. A non-transitory computer readable storage medium having stored thereon instructions for implementing the method (100) according to any one of claims 1 to 9, when executed in a device having processing capabilities.

11. A device (300) for adapting encoding of image frames of a video, wherein the image frames are arranged in a sequence of groups of pictures, GOPs, and wherein each GOP contains an intra frame and a plurality of successive inter frames, the device comprising circuitry (320) configured to execute functions (332) for implementing the method according to any one of claims 1 to 10.
